(19) Europäisches Patentamt
European Patent Office
Office européen des brevets

(11) Veröffentlichungsnummer: **0 048 369 A2**

(12) # EUROPÄISCHE PATENTANMELDUNG

(21) Anmeldenummer: 81107010.1

(22) Anmeldetag: 07.09.81

(51) Int. Cl.³: C 08 G 18/83
C 08 G 59/50, C 08 G 18/50
C 08 G 18/46, C 08 G 18/64

(30) Priorität: 20.09.80 DE 3035639

(43) Veröffentlichungstag der Anmeldung: 31.03.82 Patentblatt 82/13

(84) Benannte Vertragsstaaten: BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Wellner, Wolfgang, Dr.
Hahnenweg 8
D-5000 Koeln 80(DE)

(72) Erfinder: Buysch, Hans-Josef, Dr.
Brandenburger Strasse 28
D-4150 Krefeld(DE)

(72) Erfinder: Weissel, Oskar, Dr.
Deswatinesstrasse 70
D-4150 Krefeld(DE)

(72) Erfinder: Gruber, Hermann, Dr.
Paul-Klee-Strasse 87
D-5090 Leverkusen(DE)

(54) **Neue Di- und Polyamine und ihre Verwendung.**

(57) Die Erfindung betrifft lineare oder verzweigte, primäre Di- oder Polyamine mit endständigen primären Aminogruppen, erhältlich durch Hydrogenolyse von Di- und Poly(-O-benzylurethanen) aus Di- und Polyisocyanaten, die in ihren Molekülketten aliphatische, cycloaliphatische, aromatische oder araliphatische Kohlenwasserstoffreste und Polyether-, Polyester- oder Polyetherpolyestersegmente und stets mindestens zwei Urethangruppen

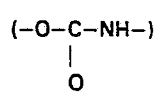

oder die vorstehend genannten Kohlenwasserstoffreste und mindestens eine Harnstoffgruppe (−NH−CO−NH−), eine Biuretgruppe (−NH−CO−N−CO−NH−), eine Allophanatgruppe

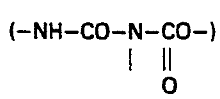

oder eine Isocyanatgruppe

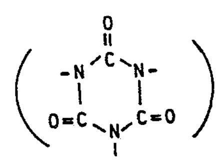

eingebaut enthalten, und Benzylalkohol mit Wasserstoff in Gegenwart von Hydrierkatalysatoren unter Abspaltung von Toluol und Kohlendioxid.

Die Di- und POlyamine werden als Härter oder als Modifizierungsmittel für 1,2-Epoxidharze oder für Harze mit Isocyanatgruppen bzw. Isocyanatgruppen liefernden Gruppen eingesetzt.

EP 0 048 369 A2

Croydon Printing Company Ltd.

BAYER AKTIENGESELLSCHAFT 5090 Leverkusen-Bayerwerk
Zentralbereich
Patente, Marken und Lizenzen Fr/AB

## Neue Di- und Polyamine und ihre Verwendung

Die Erfindung betrifft neue, lineare oder verzweigte, primäre Di- und Polyamine mit endständigen primären Aminogruppen, die mindestens zwei Urethangruppen und Polyether und/oder Polyestersegmente oder mindestens eine Harnstoff-, Biuret-, Allophanat- oder Isocyanuratgruppe im Molekül enthalten. Sie werden als Härtungs- oder Modifizierungsmittel für Epoxidharze oder für Harze mit Isocyanatgruppen oder Isocyanatgruppen liefernden Gruppen eingesetzt und zeichnen sich in vielen Fällen durch eine relativ niedrige Viskosität und eine leichte Verarbeitbarkeit aus und verleihen den Endprodukten gute anwendungstechnische Eigenschaften.

Aus der Peptidchemie ist es bekannt, primäre Aminogruppen von Aminosäuren durch Umsetzung mit Benzyloxycarbonylchlorid (=Chlorameisensäurebenzylester) in O-Benzylcarbamatgruppen zu schützen, die freie Carboxylgruppe zu aktivieren und für die Peptidsynthese durch Reaktion mit anderen, freie Aminogruppen aufweisenden Aminosäurenmolekülen auszunutzen. Anschließend wird das Umsetzungsprodukt mit den O-Benzylcarbamatgruppen einer Hydrogenolyse mit Wasserstoff in Gegenwart von Hydrierkatalysatoren unterworfen, wobei die

O-Benzylcarbamatgruppe unter Abspaltung von Toluol und Kohlendioxid in die ursprüngliche primäre Aminogruppe rückgespalten wird (vgl. Organic Reactions, New York, John Wiley & Sons, Inc. 1953, Volume VII, Seite 273, Absatz 2).

Aufgabe der vorliegenden Erfindung war es, möglichst niedrigviskose, primäre Di- und Polyamine mit Polyether- und/oder Polyestersegmenten und Urethangruppen bzw. mit Harnstoff-, Biuret-, Allophanat- oder Isocyanuratgruppen im Molekül bereitzustellen, die eine leichte Verarbeitung mit Polyepoxidharzen bzw. Isocyanatharzen ohne Verwendung von Lösungsmitteln und auch ohne Zusatz anderer dünnflüssiger Di- oder Polyamine und eine große Variationsbreite bezüglich der Eigenschaften der Härtungsprodukte ermöglichen.

Die Aufgabe wurde dadurch gelöst, daß Di- und Polyisocyanate, die Polyether- und/oder Polyestersegmente und Urethangruppen oder aber Harnstoff-, Biuret-, Allophanat- oder Isocyanuratgruppen im Molekül enthalten, mit Benzylalkohol in die entsprechenden Di- und Poly(-O-benzylurethane) überführt und letztere durch Hydrogenolyse in primäre Amine rückgespalten werden.

Obwohl die Hydrogenolyse der O-Benzylcarbamatgruppen (=O-Benzylurethangruppen) in der Peptidchemie oft mit zufriedenstellenden Ergebnissen verläuft, mußte insbesondere bei höheren Molekulargewichten der als Ausgangsmaterial dienenden Di- und Polyisocyanate mit einer schlechteren Durchführbarkeit der Hydrogenolyse gerechnet werden. Überraschenderweise verläuft sie jedoch auch bei den höhermolekularen Produkten in nahezu quantitativen Ausbeuten.

Gegenstand der Erfindung sind somit lineare oder verzweigte, primäre Di- oder Polyamine mit endständigen primären Aminogruppen, erhältlich durch Hydrogenolyse von Di- und Poly(-O-benzylurethanen) aus Di- und Polyisocyanaten, die in ihren Molekülketten aliphatische, cycloaliphatische, aromatische oder araliphatische Kohlenwasserstoffreste und Polyether-, Polyester- oder Polyetherpolyestersegmente und stets mindestens zwei Urethangruppen $(-O-\underset{O}{\underset{\|}{C}}-NH-)$ oder die vorstehend genannten Kohlenwasserstoffreste und mindestens eine Harnstoffgruppe (-NH-CO-NH-), eine Biuretgruppe $(-NH-CO-\underset{|}{N}-CO-NH-)$, eine Allophanatgruppe $(-NH-CO-\underset{|}{N}-\underset{O}{\underset{\|}{C}}O-)$ oder eine Isocyanuratgruppe

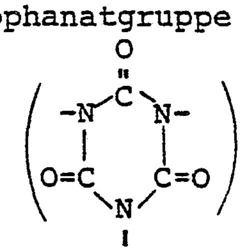

eingebaut enthalten,

und Benzylalkohol mit Wasserstoff in Gegenwart von Hydrierkatalysatoren unter Abspaltung von Toluol und Kohlendioxid.

Bevorzugte Di- und Polyamine entsprechen der allgemeinen Formel I

$$(H_2N-R^1-NH-\underset{\underset{O}{\parallel}}{C}-O-)_n \quad R^2 \qquad (I),$$

worin

$R^1$ einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

einen aromatischen, durch mindestens eine $C_1$-$C_4$-Alkylengruppe unterbrochenen Kohlenwasserstoffrest mit insgesamt 13-16 C-Atomen oder

einen araliphatischen Kohlenwasserstoffrest mit 8-15, vorzugsweise 8-13 C-Atomen,

$R^2$ einen um die Hydroxylgruppen verminderten 2-4-wertigen, vorzugsweise 2-3-wertigen Rest eines 2-4-wertigen, vorzugsweise 2-3-wertigen Alkohols, oder eines 2-4, vorzugsweise 2-3 Hydroxylgruppen aufweisenden Polyethers, Polyesters oder Polyetherpolyesters oder vorstehende Reste, die durch mindestens 2 Urethangruppen (-O-CO-NH-) unterbrochen sind und

n eine ganze Zahl von 2-4, vorzugsweise 2-3 darstellen.

Die für die Hydrogenolyse der Di- und Poly(-O-benzylurethane) notwendigen Di- und Polyisocyanate sind bekannt und stellen modifizierte Di- und Polyisocyanate dar.

Für die Modifizierung werden als Ausgangskomponenten aliphatische, cycloaliphatische, araliphatische und aromatische Polyisocyanate eingesetzt, wie sie z.B. von W. Siefken in Justus Liebigs Annalen der Chemie, 562, Seiten 75 bis 136, beschrieben werden, beispielsweise solche der Formel II

$$R^1(NCo)_m \qquad (II)$$

in der

m = 2-4, vorzugsweise 2 ist,

und $R^1$ die für Formel I angegebene Bedeutung besitzt, z.B. Ethylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato,3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat, sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenylpolymethylen-polyisocyanate, wie sie durch Anilin-Formaldehyd-Kondensation und anschließende Phosgenierung erhalten und z.B. in den GB-Patentschriften 874 430 und 848 671 beschrieben werden.

Die Modifizierung der vorgenannten Isocyanate kann einmal durch teilweise Umwandlung der Isocyanatgruppen in Harnstoff-,Biuret-, Allophanat- oder Isocyanuratgruppen erfolgen.

Harnstoffgruppen aufweisende Polyisocyanate sind beispielsweise in der DE-Patentschrift 1 230 778, Biuretgruppen aufweisende Polyisocyanate in den US-Patentschriften 3 124 605, 3 201 372 und 3 124 605 sowie in der GB-Patentschrift 889 050,Allophanatgruppen aufweisende Polyisocyanate in der GB-Patentschrift 994 890, der BE-Patentschrift 761 626 und der NL-Patentanmeldung 7 102 525, Isocyanuratgruppen aufweisende Polyisocyanate in der US-Patentschrift 3 001 973 und in den DE-Patentschriften 1 022 789 und 1 222 067 beschrieben.

Bevorzugt erfolgt die Modifizierung der Di- und Polyisocyanate etwa der Formel II durch Umsetzung mit durchschnittlich mehr als eine OH-Gruppe pro Molekül enthaltenden linearen oder verzweigten Alkoholen, Polyetheralkoholen, Polyester- oder Polyetheralkoholen, Polyestern oder Polyetherpolyestern, wobei auf eine 1 Hydroxylgruppe 1,1-5, vorzugsweise 1,1-2,5 Isocyanatgruppen eingesetzt werden. Die anschließende Entfernung des überschüssigen Isocyanats kann durch Dünnschichtdestillation erfolgen. Die Molgewichte $\bar{M}n$ der OH-Gruppen enthaltenden

Komponenten können 90-10000, vorzugsweise 900-5000 betragen. Vorzugsweise enthalten die OH-Gruppen tragenden Komponenten 2-4, insbesondere 2-3 OH-Gruppen pro Molekül.

Als Alkohole und Polyetheralkohole seien beispielhaft genannt:
Butylenglykol-(1,4) und -(2,4), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht $\bar{M}n$ bis 400, Dipropylenglykol, höhere Polypropylengykole mit einem Molekulargewicht $\bar{M}n$ bis 400, Dibutylenglykol, höhere Polybutylenglykole mit einem Molekulargewicht $\bar{M}n$ bis 400, 4,4'-Dihydroxy-diphenylpropan, Di-hydroxymethyl-hydrochinon, Diethanolamin, N-Methyldiethanolamin, Triethanolamin, Polymerisationsprodukte von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan,

Anilin, Ethanolamin oder Ethylendiamin hergestellt mit Molekulargewichten $\overline{M}n$ größer als 400. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen für die Modifizierung in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind für die Modifizierung geeignet.

Die für die Modifizierung in Frage kommenden Hydroxylgruppen aufweisenden Polyester bzw. Polyesterpolyetheralkohole sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele für solche Carbonsäure und Alkohole und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4,), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage.

Als Polyester kommen auch Hydroxylgruppen aufweisende Polycarbonate der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Die vorgenannten OH-Gruppen enthaltenden Komponenten werden in Substanz oder in gegenüber den Reaktanten inerten

Lösungsmitteln in bekannter Weise mit Di- und/oder Polyisocyanaten modifiziert und in Isocyanatgruppen enthaltende sogenannte Isocyanatprepolymere übergeführt. Nimmt man eine bestimmte zusätzliche Kettenverlängerungsreaktion über Urethangruppen in Kauf oder ist diese sogar erwünscht, so setzt man die hydroxylgruppenhaltige Polymerisations- oder Polykondensationsprodukte gegebenenfalls zunächst bei 0 - 25°C und unter Kühlung und später gegebenenfalls über mehrere Stunden unter Erwärmung auf vorzugsweise 50 - 120°C in einem NCO/OH-Verhältnis von 1,5 - 2,5 zu 1, vorzugsweise von 1,8 - 2,2 zu 1, mit den Di- oder Polyisocyanaten um. Ist eine Kettenverlängerungsreaktion nicht erwünscht, so verwendet man einen wesentlich größeren Überschuß an Di- bzw. Polyisocyanat, vorzugsweise für ein NCO/OH-Verhältnis von 3-5 zu 1 berechnet, verfährt im übrigen in derselben Weise wie bei den niedrigen NCO/OH-Verhältnissen und entfernt schließlich das überschüssige Di- bzw. Polyisocyanat, z.B. im Falle destillierbarer Di- bzw. Polyisocyanate durch Dünnschichtdestillation oder, bei nicht destillierbaren Isocyanaten, durch Lösungsmittelextraktion.

Geeignete Lösungsmittel bei der Herstellung der modifizierten Di- und Polyurethane sind z.B. Ester, wie Ethylacetat, Butylacetat, Methylglykolacetat und Ethylglykolacetat, Ketone wie Methylethylketon, Methylisobutylketon, Aromaten, wie Toluol, Xylol und höhere Aromatengemische, sowie Gemische der genannten Lösungsmittel.

Bevorzugte modifizierte Di- und Polyisocyanate, die nach Urethanisierung mit einem Benzylalkohol und anschließender Hydrogenolyse zu den bevorzugten Di- und Polyaminen der Formel I führen, entsprechen der Formel III

$$(OCN-R^1-NH-\underset{\underset{O}{\|}}{C}-O-)_n\ R^2 \qquad (III)$$

in der $R^1$, $R^2$ und n die für Formel I angegebene Bedeutung besitzen.

Besonders bevorzugte (modifizierte) Di- und Polyisocyanate sind Umsetzungsprodukte aus Isophorondiisocyanat, Hexamethylendiisocyanat, Toluylendiisocyanat oder deren Mischungen und einem Polypropylenglykolether, Polyethylenglykolether, Polybutylenglykolether, einem propoxylierten Trimethylolpropan, propoxylierten Bisphenol A oder deren Mischungen, wobei auf eine Hydroxylgruppe 1,1-5, vorzugsweise 1,1-2,5, Isocyanatgruppen eingesetzt worden sind. Weiter sind solche Di- und Polyisocyanate besonders bevorzugt, welche Umsetzungsprodukte aus Toluylendiisocyanat, Diphenylmethandiisocyanat oder deren Mischungen und mindestens einem, 2-4 Hydroxylgruppen pro Molekül aufweisenden Polyester aus Adipinsäure und Ethylenglykol, Propylenglykol, Butylenglykol, 1,6-Hexandiol, Di-, Tri- oder Tetraethylenglykol oder deren Mischungen darstellen, wobei auf 1 Hydroxylgruppe des Polyesters 1,1-5, vorzugsweise 1,1-2,5, Isocyanatgruppen eingesetzt worden sind.

Die Herstellung der Di- und Poly(-O-benzylurethane) erfolgt zweckmäßig durch Addition eines Benzylalkohols an die (modifizierten) Di- und Polyurethane bei 40-150°C, vorzugsweise 50-120°C, in praktisch äquivalenten Mengenverhältnissen. Die Reaktion wird vorzugsweise in Gegenwart eines Katalysators und gegebenenfalls in Gegenwart eines Lösungsmittels durchgeführt, bis kein Isocyanat mehr nachzuweisen ist.

Da die Benzylgruppe während der späteren Hydrogenolyse abgespalten wird, ist es am sinnvollsten, Benzylalkohol für die Urethanisierung einzusetzen. Es können jedoch kern- und seitenkettensubstituierte Benzylalkohole oder Benzhydrol oder Fluorenol eingesetzt werden.

Als Katalysatoren kommen tertiäre Amine wie Dimethylbenzylamin, Verbindungen des Zinns, Bleis und Titans, beispielsweise Zinnoctoat, Dibutylzinndilaurat, Bleioctoat in Frage, und zwar in Mengen von 0,01 bis 1,0 Gew.-%, bezogen auf Reaktionsmischung.

Als gegebenenfalls zu verwendende Lösungsmittel seien Alkohole, Ether und Kohlenwasserstoffe wie Dioxan, Ethylenglykoldimethylether, Dibutylether, Diisopropylether, Benzol, Toluol und Xylole genannt.

Die Hydrogenolyse der Di- und Poly(-O-benzylurethane) durch Hydrierung mit Wasserstoff verläuft schon bei Raumtemperatur (20°C) unter Normaldruck mit annehmbarer Geschwindigkeit bei genügend hohen Katalysatordosen (z.B. 10 Gew.-%).

Rascher und mit weniger Kontakt erfolgt sie bei Temperaturen

zwischen 30 und 120°C, besonders 40-110°C. Man kann in Ausnahmefällen auch bei Temperaturen bis 150°C arbeiten.

Der Wasserstoffdruck kann zwischen 1-300 bar, vorzugsweise 3-200 bar und besonders bevorzugt 5-150 bar, betragen. Die Katalysatormenge kann zwischen 0,005-10 Gew.-%, bevorzugt 0,01-2,0, besonders bevorzugt 0,02-1,0 Gew.-% Metall, bezogen auf das zu hydrierende Polybenzylurethan, liegen.

Für die Hydrierung werden typische Hydrierkatalysatoren verwendet, die unter den Verfahrensbedingungen eine geringe Aktivität für die Hydrierung aromatischer Kerne aufweisen.

Geeignet sind insbesondere solche Katalysatoren, die als wirksame Bestandteile Elemente der Gruppen 8 und 1b des Periodensystems enthalten, wie z.B. Nickel, Kobalt, Kupfer oder Palladium.

Diese können für sich als feinverteilte Metalle, z.B. Palladiumschwarz, in Form von Skelettkatalysatoren, z.B. Raney-Nickel, Raney-Kobalt, Raney-Kupfer, als Trägerkatalysatoren, z.B. Nickel-Kieselgur, Palladium-Kohle, Palladium-Aluminiumoxid, Palladium-Siliciumdioxid, Palladium-Bariumsulfat, oder als Mischkatalysatoren, z.B. Nickelchromit-Katalysatoren, Kupferchromit-Katalysatoren, eingesetzt werden. Die Hydrierung kann auch mit im Festbett angeordneten Katalysatoren erfolgen.

Besonders geeignet sind Palladium- und Nickelkatalysatoren, vorzugsweise Palladium-Trägerkatalysatoren und Nickel-Skelettkatalysatoren.

Die Hydrogenolyse kann in Substanz oder in Lösung durchgeführt werden. Bei der Hydrierung hochviskoser oder fester Produkte verwendet man zweckmäßig die gleichen Lösungsmittel, die bei der Herstellung der Di- und Poly(-O-benzylurethane) eingesetzt werden können. Darüberhinaus werden vorzugsweise Alkohole wie Methanol, Ethanol, Isopropanol, n-Butanol, Isobutanol und tert. Butanol verwendet.

Zur Aufarbeitung der Hydrierungsprodukte wird zunächst durch Filtrieren oder Zentrifugieren - beim Arbeiten mit Festbettkatalysatoren entfällt dieser Schritt - der Kontakt abgetrennt und dann, falls notwendig, flüchtige Reaktionsprodukte wie Toluol und gegebenenfalls Lösungsmittel destillativ, gegebenenfalls unter vermindertem Druck, beispielsweise mit Hilfe eines Dünnschichtverdampfers, bei Temperaturen von o-180°C, bevorzugt 20-150°C, besonders bevorzugt bei 20-120°C entfernt.

Die erfindungsgemäßen Polyamine sind ausgezeichnete Mittel zur Modifizierung von Epoxidharzen und von Harzen mit Isocyanatgruppen oder Isocyanatgruppen liefernden Gruppen. Sie dienen zur Herstellung von Lacken, Formkörpern, Vergußmassen, Spachtelmassen, Überzügen, Beschichtungen, Dichtungs-, Kitt- und Verbindungsmassen.

Epoxidharze, insbesondere die aus Diphenolpropan und Epichlorhydrin hergestellten, ergeben nach Aushärtung mit Polyaminen harte und chemikalienbeständige Massen und haftfeste Überzüge; es mangelt ihnen jedoch häufig an Elastizität. Dies gilt besonders für die Epoxidharze auf Basis Diphenylolpropan. Die hier erwünschte Flexibilität und Elastizität, die sich bei den gehärteten Formkörpern, Überzügen, Fugendichtungen, Beschichtungen und Verbindungsmassen in einer verbesserten Schlag- und Stoßfestigkeit, Dehnbarkeit und Komprimierbarkeit äußert, lassen sich durch Einsatz der erfindungsgemäßen Polyamine in hervorragender Weise realisieren. Durch die außerordentlich große Variationsbreite der erfindungsgemäß herstellbaren Polyamine, die von linearen, aliphatischen Diaminen auf Polyetherbasis mit Molgewichten von mehreren 1000, über verzweigte, mehrere Aminogruppen in einem kleinen Molekül neben Urethan-, Isocyanat-, Biuret-, oder Allophanatgruppen enthaltende aliphatische Polyamine bis zu linearen oder verzweigten aromatischen Di- oder Polyaminen auf Polyether- oder Polyesterbasis mit sehr unterschiedlichen Molgewichten reicht, ist es möglich, die Eigenschaften der gehärteten Produkte in einem weiteren Rahmen nach Wunsch einzustellen.

Besondere Bedeutung kommt dabei den höhermolekularen aromatischen Polyaminen zu. Aromatische Amine können ja wegen ihrer Toxizität nur unter Beachtung gewisser Vorschriften und Vorsichtsmaßnahmen in einem beschränkten Rahmen als Härter für Epoxidharze und Polyurethane eingesetzt werden.

Durch die Anbindung an große Moleküle werden die aromatischen Amine sehr wirksam entgiftet. Stäube und Dämpfe können nicht mehr auftreten, die Resorptions- und Migrationsgeschwindigkeit im Organismus ist stark reduziert, und damit sind Intoxikationen jeglicher Art sehr unwahrscheinlich geworden.

Mit aromatischen Aminen der erfindungsgemäßen Art gehärtete Epoxide und Polyurethane können daher Anwendungen finden, die ihnen bisher wegen potentieller Gefahren für die Gesundheit verschlossen waren, z.B. für Behälter- und Bodenbeschichtungen in der Lebensmittel verarbeitenden Industrie.

Gegenstand der vorliegenden Erfindung ist daher auch die Verwendung der erfindungsgemäßen Polyamine zur Härtung oder Modifizierung von Epoxidharzen und Harzen mit Isocyanatgruppen oder Isocyanatgruppen liefernden Gruppen (= Polyurethanmassen).

Als Epoxide kommen die bekannten, üblichen Polyepoxide mit mehr als einer 1,2-Epoxidgruppe in Frage. Das sind unter anderem Polyglycidylether mehrwertiger Phenole, beispielsweise aus Brenzkatechin, Resorcin, Hydrochinon, aus 4,4'-Dihydroxydiphenylmethan, aus 4,4'-Di-hydroxy-3,3'-dimethyldiphenylmethan, aus 4,4'-Dihydroxy-diphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; aus Novolaken (d.h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxicarbonsäure mit einem Mol eines Dihalogenalkans oder Dihalogendialkylethers erhalten wurden (vgl. britische Patentschrift 1 017 612), aus Polyphenolen, die durch Kondensation von Phenolen und langkettigen, mindestens 2 Halogenatome enthaltenden Halogenparaffinen erhalten wurden (vgl. britische Patentschrift 1 024 288).

Außer den Epoxyharzen auf Basis eines mehrwertigen Phenols und einer Chlorepoxyverbindung können auch die epoxydierten Ringverbindungen gemäß US-Patentschrift 2 715 123 verwendet werden.

Weiter seien genannt Glycidylether mehrwertiger Alkohole, beispielsweise aus 1,4-Butandiol, 1,4-Butendiol, Glycerin, Trimethylolpropan, Pentaerythrit und Polyethylenglykolen.

Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyl-trimethylentrisulfon, epoxidiertes Polybutadien, epoxidiertes Leinöl, Vinylcyclohexendiepoxid.

Außerdem kommen in Frage: Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können, und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

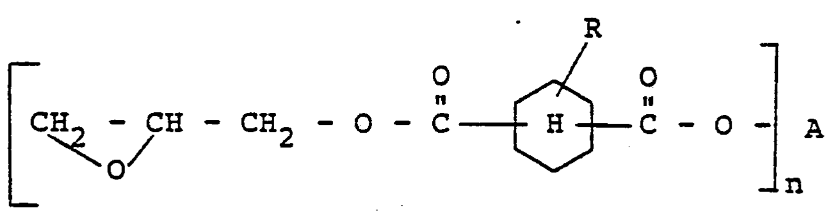

worin A einen mindestens 2-wertigen Rest eines gegebenenfalls durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder Alkylreste mit 1-3 C-Atomen und n eine Zahl zwischen 2 bis 6 bedeuten, oder Mischungen von Glycidylcarbonsäureestern der angegebenen allgemeinen Formel (vgl. britische Patentschrift 1 220 702).

Von Interesse sind auch Epoxidharze, die mit Monocarbonsäuren umgesetzt wurden, insbesondere mit Fettsäuren, wie denjenigen aus Leinsamenöl, Sojaöl, Safranöl, Perillaöl, Tungöl, Mohnsamenöl, Sonnenblumenöl, Tallöl, Walnußöl, dehydratisiertes Ricinusöl, Heringöl u. dgl. Die Epoxidharze können in einfacher weise verestert werden, indem man sie in Gegenwart von einer oder mehreren Carbonsäuren unter Rückflußkühlung erwärmt und das Wasser gleichzeitig azeotrop entfernt.

Bevorzugt sind Polyglycidylether mehrwertiger Phenole und mehrwertiger Alkohole sowie Glycidylester, insbesondere Polyepoxide auf Basis des Bisphenol A.

Die Harzkompositionen aus Härter und Epoxidkomponenten können zusätzlich Extender wie Cumaronöl, Verdünnungsmittel wie Dibutylphthalat enthalten, wenn sie auch vorzugsweise ohne solche eingesetzt werden, ferner Reaktivverdünner wie Monoglycidester oder Monoglycidether, wie Umsetzungsprodukte von Phenolen mit Epichlorhydrin, Katalysatoren, die die Härtung beschleunigen, wie Alkohole, Phenole, tert. Amine oder organische Säuren wie Salicylsäure und Amine, Säuren wie $BF_3$ oder dessen Addukte mit Alkoholen, Phosphorverbindungen wie Triphenylphosphit, Retarder, die die Aushärtung verzögern, wie Ketone oder Ester, und schließlich feste Zuschläge, Füllmaterialien und Verstärkungsstoffe wie Talkum, Quarzmehl, Titandioxid, Kieselgur, Schwerspat, Asbest,

Glasfasern, Zinkstaub, Glimmer, Sikkative, Tixotropierungsmittel und Farbstoffpigmente wie Eisenoxid, Chromoxid und Cadmiumsulfid. Bei Außenanwendung können auch UV-Stabilisatoren zugesetzt werden.

Mit besonderem Vorteil finden die beschriebenen Systeme dort Anwendung, wo kalthärtende Epoxidharze in der Regel eingesetzt werden, z.B. für die Fertigung von Gießkörpern und Harzmatten, besonders aber auf dem Beschichtungs- und Lackierungssektor für Verguß und Dichtungsmassen.

Als zu überziehende bzw. zu beschichtende oder zu verbindende Substrate kommen Metalle, Holz, Papier, Kartonagen, Textilien, Leder, Glas, Kunststoffe, keramische Materialien, Beton- und Gesteinsmassen in Frage.

Geeignete Ausgangsprodukte für die Herstellung von Polyurethanen unter Verwendung der erfindungsgemäßen Polyamine sind Isocyanat- oder verkappte Isocyanatgruppen enthaltende Polymerisations- oder Polykondensationsprodukte (Isocyanatprepolymere), die durch Umsetzung der entsprechenden Hydroxyl-, Amino- oder Sulfhydrylgruppen tragenden Polymerisations- oder Polykondensationsprodukte, wie vorzugsweise der üblichen hydroxylgruppenhaltigen Polyether, Polythioether, Polyester, Polyacetale oder Polyesteramide mit Di- oder Polyisocyanaten z.B. in einem NCO/OH-Verhältnis von 1,5-2,5 zu 1 oder mit einem großen Isocyanatüberschuß und anschließende Entfernung des Isocyanatüberschusses, z.B. durch Dünnschichtdestillation gewonnen werden.

Geeignete Verkappungsmittel sind z.B. Phenole, Lactame oder Acetessigester.

Zusammen mit den Polyepoxiden, den Polyisocyanatharzen bzw. den verkappten Polyisocyanatharzen können, falls gewünscht, auch zusätzlich zu den erfindungsgemäßen Polyaminen andere Polyamine bzw. Amin abspaltende Verbindungen eingesetzt werden. Hierunter sind die zur Härtung von Polyepoxiden gebräuchlichen Aminogruppen enthaltenden Verbindungen zu verstehen, z.B. aliphatische, cycloaliphatische oder heterocyclische Polyamine bzw. Polyamidamine. Bevorzugt geeignet sind Alkylenpolyamine wie Ethylendiamin, Diethylentriamin, Triethylentetramin, Tetraethylenpentamin, 1,4-Diaminobutan, 1,3-Diaminobutan, Hexamethylendiamin, 3-(n-Isopropylamino)-propylamin, N,N'-Diethyl-1,3-propandiamin, Hexapropylenheptamin, Penta-(1-methylethylen)-hexamin, Tetrabutylenpentamin, Hexa-(1,1-dimethylethylen)-heptamin, Di-(1-methylbutylen)-triamin, Tetra-(1,2-dimethylpropylen)-pentamin und N,N'-Dibutyl-1,6-hexandiamin, cycloaliphatische Polyamine wie 1-Cyclohexylamino-3-aminopropan, 1,4-Diaminocyclohexan, 1,3-Diaminocyclopentan, Di-(amino-cyclohexyl)-methan, Di-(aminocyclohexyl)-sulfon, 1,3-Di-(amino-cyclohexyl)-propan, 4-Isopropyl-1,2-diamino-cyclohexan, 2,4-Diaminocyclohexan, N,N'-Diethyl-1,4-diamino-cyclohexan, Isophorondiamin und 3,3'-Dimethyl-4,4'-diamino-dicyclohexylmethan.

Verwendbare heterocyclische Polyamine sind z.B. N-(Aminoalkyl)-piperazine- wie N-Aminobutylpiperazin, N-(Aminoisopropyl-3-butoxypiperazin, N-Aminoethylpiperazin, 2,5-Dibutyl-N-aminoethylpiperazin, 2,5-Dibutyl-N-aminoethylpiperazin, deren Alkylgruppen vorzugsweise nicht mehr als 6 Kohlenstoffatome und das gesamte Molekül nicht mehr als 18 Kohlenstoffatome enthält.

Andere Härter mit mehreren Aminowasserstoffatomen sind Polyamide einer aliphatischen oder cycloaliphatischen Polycarbonsäure mit einem aliphatischen Amin. Das erhaltene Produkt besitzt mit Epoxygruppen reaktionsfähige Gruppen wie Amino- oder Carboxylgruppen.

Beispiele für mehrbasische Säuren zur Herstellung dieser Polyaminoamide sind dimerisierte sowie trimerisierte ungesättigte Fettsäuren aus der Polymerisation von Fettsäuren trocknender Öle in der Wärme. In manchen Fällen ist es vorteilhaft, zwei oder mehr der genannten Polyamine in Mischung einzusetzen.

Als aminabspaltende Verbindungen kommen die Kondensationsprodukte der beschriebenen Polyamine mit aliphatischen, cycloaliphatischen, araliphatischen und aromatischen Ketonen in Betracht. Sie werden zweckmäßig z.B. in der Weise hergestellt, daß das bei der Kondensation entstehende Wasser fortlaufend durch azeotrope Destillation aus dem Reaktionsgemisch entfernt wird. Die aminabspaltenden Verbindungen sind besonders wertvoll für die Herstellung von Einkomponentensystemen, deren Härtung durch die hydrolysierende Wirkung von Luftfeuchtigkeit zustandekommt.

Ferner aromatische Diamine wie Diaminodiphenylmethane, 4,4-Diaminodiphenylsulfon, 4,4'-Diamino-3,3'-dichlor-diphenylmethan, m-Phenylendiamin, 3,5-Diamino-4-chlor-benzoesäureethylester, Bisester von Diolen wie Hexandiol-1,6 oder Polyethylenglykolether mit Athranilsäure, 4,4'-Diamino-diphenylsulfid und weitere andere aromatische Di- und Polyamine, die üblicherweise als Härter für Epoxide und Kettenverlängerer für Polyurethane eingesetzt werden.

Zur Herstellung von gebrauchsfertigen Mischungen können weiterhin Füllstoffe, Pigmente, Lösungsmittel, Weichmacher, Verdickungsmittel und auch Dispersionen aus Wasser zugesetzt werden. Man kann auch noch Stoffe einbringen, die das Gemisch strecken oder die als Haftmittler wirken sollen, wie Teer und Teerpech, Asphalte sowie andere Kunststoffe wie Phenol-, Aldehyd-, Phenol-Harnstoff-Kunststoffe, Vinylkunststoffe, Polyolefine, synthetische Kautschukarten u.a.

Als Füllstoffe seien genannt: Sand, Gesteinsmehl, Kalziumsulfat, Kalziumcarbonat, Aluminiumpulver, ferner Kieselsäure, Asbestmehl, Koalin und Talkum.

Als Lösungsmittel, die insbesondere zur Einstellung der gewünschten Viskosität in Mengen von 5 - [illegible] %, vorzugsweise jedoch in Mengen unter 24 % Gewichtsprozent, bezogen auf die Gesamtmischung, eingesetzt werden, eignen sich z.B. Aromaten, wie Toluol, Xylol, Alkohol wie Methanol und Isopropanol, Ester und Methylisobutylketon sowie Ether.

Die erwähnten Trocknungsmittel können sein: Molekularsieb-Zeolithe wie Natriumalumosilikat, Orthoameisensäureester, niedrigmolekulare Isocyanatverbindungen wie Phenylisocyanat, ferner Metallalkoholate wie Aluminiumisobutylat und Titantetrabutylat.

Katalysatoren zur Beschleunigung der Härtung können ebenfalls eingesetzt werden. Es kommen die in der Epoxidharz-Chemie bekannten Beschleuniger in Betracht, wie z.B. die Umsetzungsprodukte aus Phenol bzw. substituierten Phenolen mit Formaldehyd und Ammoniak, Salicylsäure, tertiäre Amine, Aminoalkohole, Benzylalkohol, Phosphine und Phosphite, p-Toluolsulfonsäureester, N-Hydroxyethylpiperazin und Titansäureester, ferner die in der Isocyanatchemie üblichen Beschleuniger wie tertiäre Amine, Diazabicyclo-(2,2,2)-octan, Amidine, Diazabicyclo-0,3,4)-nonen, Verbindungen des Bleis, des zwei- und vierwertigen Zinns und des vierwertigen Titans.

Die mit erfindungsgemäßen Aminen hergestellten Mischungen eignen sich auch zur Herstellung von Überzügen und Formkörpern, bei denen es auf besondere Elastizität ankommt. Es lassen sich Ein- und Zweikomponentensysteme herstellen, die z.B. für Dachbeschichtungen und Fußbodenbeschichtungen geeignet sind.

Ferner können Überzüge mit den erfindungsgemäßen Mischungen für den Verschleißschutz auf Metallen eingesetzt werden. Die Härtung wird durch Anwendung höherer Temperaturen beschleunigt. Das Einlegen von Textilgeweben oder Glasmatten ist möglich. Als kittartige Massen können die Verfahrensprodukte als Dichtungsmassen auf dem Bausektor

eingesetzt werden. Es ist bemerkenswert, daß bei den erfindungsgemäßen Mischungen das Problem mangelnder Zwischenschichthaftung nicht auftritt. Dieser Effekt ist bei reinen Epoxidharzen besonders dann akut, wenn bei mehrschichtigem Filmaufbau längere Wartezeiten zwischen den einzelnen Beschichtungsvorgängen auftreten. Reine Epoxidharzfilme zeigen unter diesen Bedingungen mangelhafte Haftfestigkeit, während die erfindungsgemäßen Mischungen selbst nach längerer Alterung gute Zwischenschichthaftung aufweisen.

Die in den Beispielen angegebenen Teile und Prozente, sofern nicht anders angegeben, beziehen sich auf das Gewicht. Die angegebenen Viskositäten werden bei t = 20°C gemessen.

Beispiel 1

Ein Diisocyanat, hergestellt aus einem Polypropylenglykolether ($\bar{M}n$ ca. 1900, 1,7 % OH) und Isophorondiisocyanat mit einem NCO-Gehalt von 4,0 %, durch Dünnschichtdestillation von Monomeren befreit, wird mit 10,3 g Benzylalkohol auf 100 g des Diisocyanates in Gegenwart von 0,1 g Zinnoctoat als Katalysator durch Erwärmen auf 50-60°C quantitativ in das entsprechende Dibenzylurethan übergeführt.

700 g des so erhaltenen Bisurethans werden in 500 ml Methanol aufgenommen und nach Zugabe von 26 g eines Palladiumkatalysators auf Aktivkohle (5 Gew.-% Pd) in einem Schüttelautoklaven 3,5 h bei 100°C und 50-60 bar Wasserstoffdruck hydriert. Der Katalysator wird durch Filtration abgetrennt und die klare Lösung bis zu einer Sumpftemperatur von 100°C, zuletzt bei reduziertem Druck, eingedampft.

Man erhält ein farbloses bis blaßgelbes Öl (= 600 g) mit einer Viskosität von 8800 mPa.s, einem Gehalt an basischem Stickstoff von 1,31 Gew.-% (ber. 1,36) und an Gesamtstickstoff von 2,66 Gew.-% (ber. 2,72). Da der basische Stickstoffgehalt innerhalb der Fehlergrenzen die Hälfte des Gesamtstickstoffs darstellt, ist die Hydrierung des Benzylurethans praktisch quantitativ verlaufen, d.h. es wurde ein polymeres, diprimäres, aliphatisches Diamin erhalten.

Beispiel 2

Ein Triisocyanat, hergestellt aus einem auf Trimethylolpropan gestarteten Polypropylenglykolether ($\bar{M}n$ 2900, 1,7 % OH) und 2,4-Toluylendiisocyanat mit einem NCO-Gehalt von 3,5 Gew.-%, das durch Dünnschichtdestillation monomerenfrei gemacht wurde, wird mit 9,0 g Benzylalkohol pro 100 g Triisocyanat in Gegenwart von 0,1 g Dibutylzinndilaurat bis zum Verschwinden der Isocyanatgruppen bei 60°C umgesetzt.

450 g des so erhaltenen Trisbenzylurethans werden in 300 ml Isopropanol gelöst und 5 h bei 60°C und 100 bar Wasserstoffdruck in einem Rührautoklaven hydriert.

Nach Abfiltrieren des Kontaktes wird das klare Filtrat bis zu einer Sumpftemperatur von 110°C, zuletzt bei vermindertem Druck, eingedampft. Man erhält 385 g eines blaßgelben Öles mit einer Viskosität von 16600 mPa.s, einem Gehalt an Gesamtstickstoff von 2,32 Gew.-% und an basischem Stickstoff von 1,15 Gew.-%. Das Verhältnis der beiden Stickstoffwerte zeigt eine praktisch quantitative Umwandlung des Benzylurethans in ein polymeres, triprimäres, aromatisches Triamin an.

Beispiel 3

Ein Polyisocyanat mit Isocyanuratgruppen, hergestellt durch katalytische Trimerisierung von Isophorondiisocyanat, das als 70 %ige Lösung in Xylol vorliegt, wird entsprechend dem Isocyanatgehalt von 11,5 Gew.-% mit 29,6 g Benzylalkohol pro 100 g Lösung in Gegenwart von 0,1 g

Dibutylzinndilaurat als Katalysator bei 70-80°C bis zum Verschwinden der Isocyanatgruppen umgesetzt. Nach Verdünnen mit der gleichen Menge Isopropanol werden 300 g des Polybenzylurethans nach Zugabe von 12 g Palladium auf Kohle (5 Gew.-% Pd) 4 h bei 60°C und 100 bar Wasserstoffdruck in einem Schüttelautoklaven hydriert. Nach Abziehen des Lösungsmittels und flüchtiger Reaktionsprodukte erhält man 180 g eines fast farblosen, festen Harzes mit einem Gehalt an Gesamtstickstoff von 9,57 Gew.-% und an basischem Stickstoff von 4,3 % (ber. 6,07 %). Die Ausbeute, bezogen auf den ursprünglichen NCO-Stockstoff, beträgt demnach 71 % d. Th.

Beispiel 4

Ein Polyisocyanat, hergestellt durch Biuretisierung von Hexamethylendiisocyanat-1,6 mit einem NCO-Gehalt von 22 Gew.-% wird mit 60,5 g Benzylalkohol pro 100 g Polyisocyanat bei 60°C bis zum Verschwinden der Isocyanatgruppen in Gegenwart von 0,1 g Dibutylzinndilaurat umgesetzt. 300 g des so erhaltenen Polybenzylurethans werden in ca. 300 ml Isopropanol gelöst, mit 15 g Palladium auf Aktivkohle versetzt, und im Rührautoklaven 5 h bei 60°C und 100 bar Wasserstoffdruck hydriert. Nach Abziehen des Lösungsmittels und flüchtiger Reaktionsprodukte, zuletzt unter reduziertem Druck bis zu einer Sumpftemperatur von 110°C, erhält man 240 g eines dickflüssigen hellen Harzes mit einem Gehalt an basischem Stickstoff von 4,78 Gew.-%

(ber. 8,45 %) und an Gesamtstickstoff von 14,7 Gew.-%. Die Ausbeute an basischem Stickstoff, bezogen auf den ursprünglichen NCO-Stickstoff, beträgt demnach ca. 58 % d.Th.

Durch Verdünnen mit 20 Gew.-% Benzylalkohol gewinnt man einen gut fließenden Kalthärter für Epoxyharze (Viskosität 36000 mPa.s).

Beispiel 5

Ein Diisocyanat, hergestellt durch Addition von Hexamethylendiisocyanat-1,6 an ein propoxyliertes Bisphenol A mit 5 Gew.-% OH ($\bar{M}n$ 680 ), das durch Dünnschichtdestillation von Monomeren befreit ist und einen NCO-Gehalt von 7,9 Gew.-% aufweist, wird in Gegenwart von 1 Gew.-% Bleioctoat als Katalysator mit 20,6 g Benzylalkohol pro 100 g Diisocyanat bis zum vollständigen Umsatz der NCO-Gruppen bei 70°C gerührt.

1774 g des so erhaltenen Bisbenzylurethans wird nach Verdünnen mit 1 l Isopropanol und Zugabe von 36 g Palladium auf Aktivkohle bei 60°C und 80 bar Wasserstoffdruck in einem Schüttelautoklaven 10 h lang hydriert. Nach Aufarbeitung erhält man ein hochviskoses, blaßgelbes Harz mit einem Gehalt an Gesamtstickstoff von 5,85 Gew.-% und an basischem Stickstoff von 2,30 Gew.-% (ber. 2,78). Die Ausbeute an basischem Stickstoff, bezogen auf ursprünglichen NCO-Stickstoff, beträgt somit 83 % d.Th.

Beispiel 6

Ein Diisocyanat, hergestellt aus einem Polypropylenglykolether ($\overline{M}n$ 4000, 0,85 % OH) und 14 g 2,4-Diphenylmethandiisocyanat pro 100 g Polypropylenglykolether (NCO-Gehalt von 2,3 Gew.-%) wird mit 6,2 g Benzylalkohol in Gegenwart von 0,1 g Zinn-Octoat zum Dibenzylurethan umgesetzt.

800 g des so gewonnenen Produktes werden mit 500 g Isopropanol verdünnt, mit 9 g Palladiumkontakt versetzt und bei 60°C und 80 bar hydriert. Nach Aufarbeitung wie in Beispiel 2 erhält man ein gelbliches, hochviskoses Harz mit einem Gehalt an Gesamtstickstoff von 1,35 Gew.-% und an basischem Stickstoff von 0,64 Gew.-%.

Aus dem Verhältnis der beiden Stickstoffwerte ergibt sich, daß die Ausbeute an basischem Stickstoff nahezu vollständig ist.

Beispiel 7

Ein Polyisocyanat, wie in Beispiel 1 beschrieben, wird mit Benzylalkohol umgesetzt und in einer Schüttelapparatur bei 8o°C unter 1,5 bar Wasserstoffdruck in Gegenwart von 10 g Palladium auf Kohle (10 % Palladium) 20 h hydriert. Man erhält ein aliphatisches Polyamin mit einem Gehalt an basischem Stickstoff von 1,10 % und an Gesamtstickstoff von 2,48 %. Die Ausbeute an basischem Stickstoff beträgt damit 89 % d.Th.

Die nachfolgenden Beispiele erläutern die Verwendung der erfindungsgemäßen Polyamine zur Härtung von Epoxidharzen.

Beispiel 8

100 g eines flüssigen Epoxidharzes, hergestellt aus Bisphenol A, mit einem Epoxidäquivalentgewicht von 180-200 werden mit 320 g des in Beispiel 1 beschriebenen aliphatischen Polyamins vermischt und bei 50°C ausgehärtet. Es wird ein weichelastisches Endprodukt mit Shore Härte A = 60 erhalten.

Beispiel 9

100 g Epoxidharz aus Beispiel 8 werden mit 300 g des in Beispiel 2 beschriebenen aromatischen Polyamins vermischt. Die flüssige Mischung ist bei Raumtemperatur länger als 10 Tage gebrauchsfertig und kann bei 180°C zu elastischen Beschichtungen gehärtet werden.

Beispiel 10

100 g Epoxidharz aus Beispiel 8 werden mit 100 g einer Härtermischung, hergestellt aus 82,5 g Polyamin gemäß Beispiel 1, und 17,5 g Isophorondiamin versetzt. Nach Zusatz von 10 g Nonylphenol als Beschleuniger härtet die Mischung zu einem Endprodukt mit Shore Härte D = 60 aus.

Beispiel 11

Herstellung einer elastifizierten Epoxidharz-Beschichtung

Komponente A

| | |
|---|---|
| Epoxidharz wie in Beispiel 8 | 31,7 Gew.-% |
| Talkum | 13,3 Gew.-% |
| Titandioxid | 5,0 Gew.-% |

Komponente B

| | |
|---|---|
| Polyamin aus Beispiel 1 | 26,2 Gew.-% |
| Isophorondiamin | 5,5 Gew.-% |
| Salicylsäure/Benzylalkohol = 1 : 7 | 4,0 Gew.-% |
| Talkum | 14,2 Gew.-% |
| Flammruß | o,1 Gew.-% |
| | 100,0 Gew.-% |

Die Komponenten A und B werden im Verhältnis 1 : 1 gemischt und reagieren zu einer Belagsmasse mit Endhärte Shore D = 60 aus.

Die weiteren Beispiele beschreiben Umsetzungen der erfindungsgemäßen Polyamine mit Polyisocyanaten.

Beispiel 12

Verglichen wird die Reaktivität des Polyamins aus Beispiel 2 mit verschiedenen Polyisocyanaten.

| | A | B | C |
|---|---|---|---|
| Polyamin aus Beispiel 2 | 100 g | 100 g | 100 g |
| 2,4-Diphenylmethan-diisocyanat | 11 g | - | - |
| Triisocyanat aus Beispiel 2 | - | 100 g | - |
| Diisocyanat aus Beispiel 1 | - | - | 80 g |
| Topfzeit der Mischung in Minuten | 3 | 25 | 90 |
| Shore Härte A | 70 | 50 | 25 |

Die Mischungen härten gut durch und führen zu elastischen Produkten mit trockener Oberflächenbeschaffenheit.

Beispiel 13

100 g eines mit Nonylphenol blockierten Triisocyanats, hergestellt aus einem auf Trimethylolpropan gestarteten Polypropylenglykolether und 2,4-Toluolendiisocyanat, mit einem Äquivalentgewicht von ca. 1600,werden mit 60 g des aliphatischen Polyamins aus Beispiel 1 und 5 g Benzyliminocaprolactam als Katalysator vermischt. Bei einer Topfzeit von 7 Minuten wird ein weichelastisches Endprodukt erhalten.

Beispiel 14

100 g des blockierten Triisocyanats aus Beispiel 13 und 70 g des aromatischen Polyamins aus Beispiel 2 ergeben bei Raumtemperatur eine gut haltbare Mischung, die bei 150°C nach 15 Minuten einen elastischen Belag mit Shore Härte A = 40 liefert.

Patentansprüche

1. Lineare oder verzweigte, primäre Di- oder Polyamine mit endständigen primären Aminogruppen, erhältlich durch Hydrogenolyse von Di- und Poly(-O-benzylurethanen) aus Di- und Polyisocyanaten, die in ihren Molekülketten aliphatische, cycloaliphatische, aromatische oder araliphatische Kohlenwasserstoffreste und Polyether-, Polyester- oder Polyetherpolyestersegmente und stets mindestens zwei Urethangruppen ($-O-\underset{\underset{O}{\|}}{C}-NH-$) oder die vorstehend genannten Kohlenwasserstoffreste und mindestens eine Harnstoffgruppe ($-NH-CO-NH-$), eine Biuretgruppe ($-NH-CO-\underset{|}{N}-CO-NH-$) eine Allophanatgruppe ($-NH-CO-\underset{|}{N}-\underset{\underset{O}{\|}}{C}O-$) oder eine

Isocyanuratgruppe

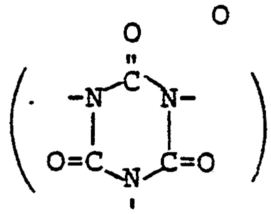

eingebaut enhalten, und Benzylalkohol mit Wasserstoff in Gegenwart von Hydrierkatalysatoren unter Abspaltung von Toluol und Kohlendioxid.

2. Di- und Polyamine gemäß Anspruch 1, dadurch gekennzeichnet, daß die Di- und Polyisocyanate der Formel

$$(OCN-R^1-NH-\underset{\underset{O}{\|}}{C}-O)_n\ R^2$$

entsprechen

worin

$R^1$ einen aliphatischen Kohlenwasserstoffrest mit 2-18 C-Atomen,

einen cycloaliphatischen Kohlenwasserstoffrest mit 4-15 C-Atomen,

einen aromatischen Kohlenwasserstoffrest mit 6-15 C-Atomen,

einen aromatischen, durch mindestens eine $C_1$-$C_4$ Alkylengruppe unterbrochenen Kohlenwasserstoffrest mit insgesamt 13-16 C-Atomen, oder

einen araliphatischen Kohlenwasserstoffrest mit 8-15 C-Atomen,

$R^2$ einen um die Hydroxylgruppen verminderten 2-4-wertigen Rest eines 2-4-wertigen Alkohols, oder eines zwei Hydroxylgruppen aufweisenden Polyesters, Polyethers oder Polyetherpolyesters oder vorstehende Reste, die durch mindestens 2 Urethangruppen (-O-CO-NH-) unterbrochen sind, und

n eine ganze Zahl von 2-4

darstellen.

3. Di- und Polyamine gemäß Anspruch 2, dadurch gekennzeichnet, daß die Di- und Polyisocyanate Umsetzungsprodukte aus Isophorondiisocyanat, Toluylendiisocyanat, Hexamethylendiisocyanat, Diphenylmethandiisocyanat oder deren Mischungen und einem Polypropylenglykolether, Polyethylenglykolether, Polybutylenglykolether, einem propoxylierten Trimethylpropan oder propoxyliertem Bisphenol A oder deren Mischungen darstellen, wobei auf eine Hydroxylgruppe 1,1-5 Isocyanatgruppen eingesetzt worden sind.

4. Di- und Polyamine gemäß Anspruch 2, dadurch gekennzeichnet, daß die Di- und Polyisocyanate Umsetzungsprodukte aus Toluylendiisocyanat, Diphenylmethandiisocyanat oder deren Mischungen und mindestens einem 2-4 Hydroxylgruppen pro Molekül aufweisenden Polyester aus Adipinsäure und Ethylenglykol, Propylenglykol, Butylenglykol, 1,6-Hexandiol, Di-, Tri- oder Tetraethylenglykol oder deren Mischungen darstellen, wobei auf eine Hydroxylgruppe des Polyesters 1,1 bis 5 Isocyanatgruppen eingesetzt worden sind.

5. Di- und Polyamine gemäß Anspruch 1, dadurch gekennzeichnet, daß das Polyisocyanat ein trimerisiertes Isophorondiisocyanat ist.

6. Di- und Polyamine gemäß Anspruch 1, dadurch gekennzeichnet, daß das Diisocyanat biuretisiertes Hexamethylendiisocyanat ist.

7. Verwendung der gemäß Anspruch 1 erhältlichen Di- und Polyamine als Härter oder als Modifizierungsmittel

für 1,2-Epoxidharze oder für Harze mit Isocyanatgruppen bzw. Isocyanatgruppen liefernden Gruppen.